# EUROPÄISCHE PATENTSCHRIFT

(11) **EP 1 557 597 B1**
(45) Veröffentlichungstag und Bekanntmachung des Hinweises auf die Patenterteilung: **11.01.2012**
(21) Anmeldenummer: 04028091.9
(22) Anmeldetag: 26.11.2004
(51) Int. Cl.: F16K 31/06, H01F 7/16, F02M 63/02, G05D 16/00

(54) **Druckregelventil für einen Hochdruckspeicher einer Verbrennungskraftmaschine**
Pressure control valve for a high pressure reservoir of an internal combustion engine
Soupape de régulation de pression d'une rampe commune d'un moteur à combustion interne

(30) Priorität: 21.01.2004 DE 102004002964
(43) Veröffentlichungstag der Anmeldung: 27.07.2005
(73) Patentinhaber: ROBERT BOSCH GMBH, 70442 Stuttgart (DE)
(72) Erfinder: Zerle, Lorenz, 86179 Augsburg (DE); Beuche, Volker, 70372 Stuttgart (DE); Busch, Roger, 73732 Esslingen (DE); Scheurer, Hans-Peter, 71672 Marbach (DE); Schoeggl, Frank, 70188 Stuttgart (DE)

(56) Entgegenhaltungen:
- EP-A- 0 243 871
- EP-A- 0 267 162
- EP-A- 0 990 791
- DE-A1- 10 236 314
- DE-A1- 10 257 663
- DE-A1- 19 952 774
- US-A- 4 905 960
- US-A- 5 413 308
- US-A1- 2003 057 394

## Beschreibung

### Technisches Gebiet

Im Betrieb einer selbstzündenden Verbrennungskraftmaschine mit Hochdruckspeicher wird der Systemdruck im Hochdruckspeicher dadurch konstant gehalten, dass der Hochdruckspeicher durch ein Druckregelventil verschlossen ist. Sobald der Druck im Hochdruckspeicher den Systemdruck übersteigt, öffnet das Druckregelventil, wenn der Druck wieder unter den Systemdruck gefallen ist, schließt das Druckregelventil. Hierdurch wird gewährleistet, dass die Kraftstoffeinspritzung in die Zylinder der Verbrennungskraftmaschine unter gleich bleibenden Konditionen erfolgt.

### Stand der Technik

Zur Regelung des Kraftstoffdrucks im Hochdruckspeicher von selbstzündenden Verbrennungskraftmaschinen wird eine Zumesseinheit und/oder ein Druckregelventil verwendet.

Das Druckregelventil ist geschlossen, wenn es nicht von einer Spannung beaufschlagt ist. Aus diesem Grund wird der Kraftstoff nach dem Abstellen des Motors im Hochdruckspeicher eingeschlossen und vom Kraftstoffrücklauf abgetrennt. Die Schließkraft zum Verschließen des Hochdruckspeichers wird von einem Federelement erzeugt, welches oberhalb der Ankerplatte des Aktors zur Steuerung des Ventils angebracht ist und das Schließelement an dem der Ankerplatte gegenüberliegenden Ende des Ventilkolbens in seinen Sitz stellt. Ein solches Druckregelventil ist aus Dieselmotor-Management, 2. Auflage, Vieweg-Verlag, 1998, Seite 270-271 bekannt.

US 4 905 960 A offenbart ein stromlos offenes Druckregelventil.

Aus EP 0 267 162 A2 ist ein Druckregelventil bekannt, bei welchem ein Federelement auf eine Platte am Ventilkolben wirkt und so das Schließelement in seinen Sitz stellt.

Beim Abkühlen des Hochdruckspeichers verringert sich das Volumen des darin eingeschlossenen Kraftstoffs und erzeugt so einen starken Druckabfall. Bei Einspritzsystemen, bei denen die Injektoren jeweils mit einem Magnetventil betrieben werden, kann über die Rücklaufleitung der Injektoren Kraftstoff in den Hochdruckspeicher nachströmen, da die Rücklaufleitungen der Injektoren über Führungsleckage im Kraftstoffinjektor mit dem Hochdruckspeicher verbunden sind.

Bei Kraftstoffinjektoren, die mit Piezoaktoren betrieben werden, tritt keine Führungsleckage auf. Somit kann kein Kraftstoff aus den Rücklaufleitungen der Injektoren in den Hochdruckspeicher gelangen. Sobald der Kraftstoffdruck im Hochdruckspeicher unter den Dampfdruck der im Kraftstoff gelösten Luft gesunken ist, gast die Luft aus, so dass neben dem flüssigen Kraftstoff auch eine Gasphase im Hochdruckspeicher enthalten ist.

Beim Start der Verbrennungskraftmaschine muss das im Hochdruckspeicher enthaltene Gas durch die Hochdruckpumpe komprimiert werden, damit sich im Hochdruckspeicher der für den Betrieb notwendige Druck aufbaut. Abhängig von der Starttemperatur der Verbrennungskraftmaschine sind hierzu mehrere Motorumdrehungen notwendig. Dies kann zu Startverzögerungen im Bereich von 1 bis 2 Sekunden führen.

### Darstellung der Erfindung

Das erfindungsgemäß ausgebildete Druckregelventil zum Öffnen bzw. Verschließen eines Ablaufs eines Hochdruckspeichers einer Verbrennungskraftmaschine umfasst ein aktorbetätigtes Schließelement, welches eine Verbindung vom Hochdruckspeicher in eine Niederdruckleitung verschließt oder freigibt. Im Druckhalteventil ist ein Federelement derart angeordnet, dass beim Stillstand der Verbrennungskraftmaschine das Schließelement die Verbindung vom Hochdruckspeicher in die Niederdruckleitung freigibt. Hierdurch wird es ermöglicht, dass beim Stillstand der Verbrennungskraftmaschine Kraftstoff aus der Rücklaufleitung in den Hochdruckspeicher gelangen kann. Hierdurch wird vermieden, dass der Druck im Hochdruckspeicher unterhalb den Dampfdruck der im Kraftstoff gelösten Luft sinkt. Das führt dazu, dass auch beim Kaltstart der Verbrennungskraftmaschine sofort Druck im Hochdruckspeicher aufgebaut werden kann und somit die Startverzögerung beseitigt wird. Erfindungsgemäß nimmt ein Ventilkolben, dessen Abschluss eine Kalotte bildet, das kugelförmige Schließelement auf.

In einer bevorzugten Ausführungsform des Druckregelventils ist das Federelement zum Öffnen des Schließelementes in einer Erweiterung des den Ventilkolben umschließenden Gehäuses aufgenommen und stützt sich mit einer Seite gegen das Gehäuse und mit der anderen Seite gegen die Ankerplatte des Aktors. Das Federelement ist dabei vorzugsweise eine Spiralfeder oder eine Tellerfeder. Das Federelement kann jedoch auch jede weitere dem Fachmann bekannte Form annehmen, die eine Druckkraft auf die Ankerplatte ausübt und so bei nicht bestromter Spule das Ventil öffnet.

In einer weiteren bevorzugten Ausführungsform ist das Federelement an der dem Schließelement zugewandten Seite des Ventilkolbens angeordnet. Hierbei umschließt das Federelement den Ventilkolben und stützt sich mit einer Seite gegen ein einen Dichtsitz aufweisendes Ventilstück. Das Federelement ist dabei vorzugsweise als konisch gewickelte Spiralfeder ausgebildet, die sich mit der anderen Seite gegen einen Absatz im Ventilkolben abstützt. Durch das Ausbilden einer Platte am Ventilkolben oder durch einen Ring, welcher sich auf den Absatz im Ventilkolben abstützt, lässt sich auch eine zylindrisch geformte Spiralfeder einsetzen. Auch hier ist jedoch jedes weitere als Druckfeder wirkende Federelement, welches dem Fachmann bekannt ist, einsetzbar.

In einer bevorzugten Ausführungsform wird das Druckregelventil mit einem elektromagnetischen Aktor betätigt. Der Aktor umfasst vorzugsweise eine Ankerplatte und eine Spule.

In einer bevorzugten Ausführungsform ist das Druckregelventil derart ausgebildet, dass bei geöffnetem Schließelement die Ankerplatte des Aktors gegen einen Anschlag gestellt ist. Hierdurch wird der Öffnungsweg des Druckregelventils eingestellt. Durch einen nur geringen Öffnungsweg wird gewährleistet, dass das kugelförmig ausgebildete Schließelement, welches in einer bevorzugten Ausführungsform nicht mit dem Ventilkolben fest verbunden ist, an seinem Platz gehalten wird.

Damit das Schließelement beim Öffnen des Ventils aus seinem Sitz gezogen wird, wird das kugelförmig ausgebildete Schließelement vorzugsweise durch Adhäsionskräfte in der Kalotte am Ventilkolben gehalten.

Zur Vermeidung statischer Überbestimmtheit kann die Kalotte als Einzelteil mit plan geschliffenen Gleitflächen am Ventilkolben und Kalottenkörper ausgeführt werden. Hierdurch wird an der Kontaktstelle der plan geschliffenen Gleitflächen ein radialer Versatz zugelassen und durch einen Ölfilm zwischen den plan geschliffenen Gleitflächen an Ventilkolben und Kalottenkörper werden die zur Öffnung notwendigen adhäsiven Kräfte gewonnen, um das Ventil zu öffnen.

### Zeichnung

Im Folgenden wird die Erfindung anhand einer Zeichnung näher beschrieben.

Es zeigt:
- Figur 1: einen Schnitt durch eine erste Ausführungsform eines erfindungsgemäß ausgebildeten Druckregelventils,
- Figur 1.1: Detail X aus Figur 1 mit kalottenförmiger Aufnahme für das Schließelement
- Figur 2: einen Schnitt durch eine zweite Ausführungsform eines erfindungsgemäß ausgebildeten Druckregelventils,
- Figur 3: einen Ausschnitt aus einem erfindungsgemäß ausgebildeten Druckregelventil mit auf die Ankerplatte wirkender Tellerfeder,
- Figur 4: einen Ausschnitt aus einem erfindungsgemäß ausgebildeten Druckregelventil mit zylindrisch ausgebildeter Spiralfeder.

### Ausführungsvarianten

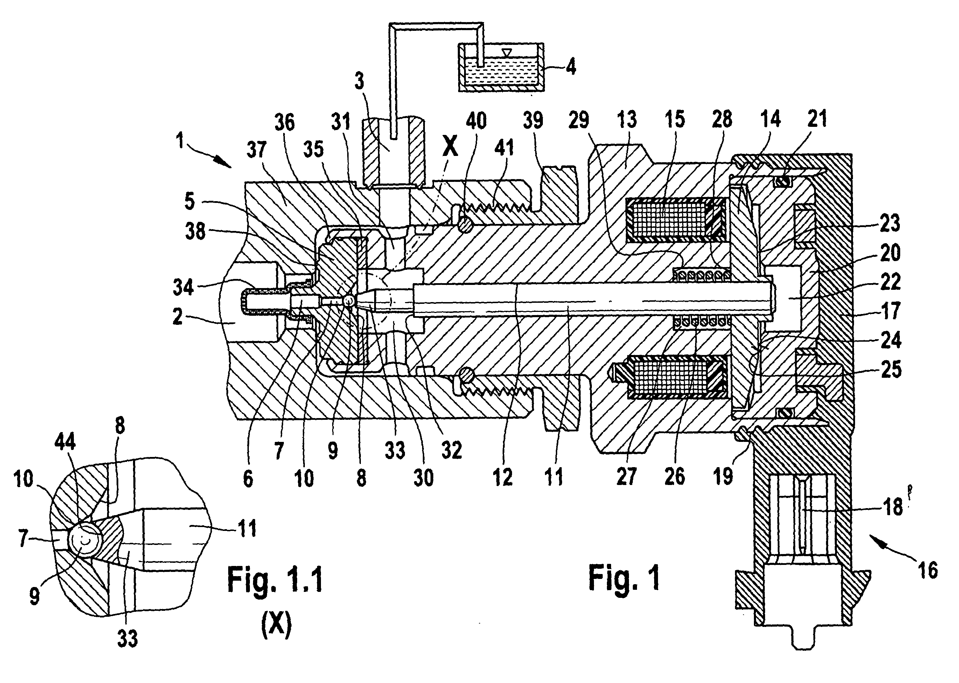

Figur 1 zeigt ein Schnitt durch ein erfindungsgemäß ausgebildetes Druckregelventil in einer ersten Ausführungsform.

Ein Druckregelventil 1 verschließt die Verbindung von einem Kraftstoffhochdruckspeicher 2 zu einer Niederdruckleitung 3, die mit einem Kraftstoffvorratsbehälter 4 verbunden ist, oder gibt diese frei. Hierzu umfasst das Druckregelventil 1 ein Ventilstück 5, in welchem eine zentrale Bohrung 6 aufgenommen ist. Die Bohrung 6 geht in eine Drosselstelle 7 über, die in einem Konus 8 ausläuft. Die zentral im Ventilstück 5 angeordnete Bohrung 6 wird mit einem Schließelement 9, welches hier als Ventilkugel ausgebildet ist, verschlossen, indem das Schließelement 9 in einen Dichtsitz 10 im Konus 8 gestellt wird.

Neben dem in Figur 1 dargestellten kugelförmigen Schließelement 9, welches mittels eines Ventilkolbens 11 geführt wird, mit dem Ventilkolben 11 aber nicht fest verbunden ist, kann das Schließelement 9 auch fest mit dem Ventilkolben 11 verbunden sein und zum Beispiel als kugelförmiger oder kegelförmiger Abschluss des Ventilkolbens 11 ausgebildet sein. Auch kann an Stelle des hier dargestellten Sitz-Ventils ein Schieber-Ventil oder Flachsitz-Ventil eingesetzt werden.

Der Ventilkolben 11 ist zur Steuerung des Schließelementes 9 in einer Führung 12 in einem Ventilgehäuse 13 geführt. An seiner dem Schließelement 9 abgewandten Seite ist der Ventilkolben 11 mit einer Ankerplatte 14 versehen. Bei der Bestromung einer im Ventilgehäuse 13 aufgenommenen Magnetspule 15 wird die Ankerplatte 14 von der Magnetspule 15 angezogen. Hierdurch bewegt sich der Ventilkolben 11 in Richtung der Bohrung 6 im Ventilstück 5 und stellt das Schließelement 9 in seinen Schließsitz 10. Die Spannungsversorgung der Magnetspule 15 erfolgt über einen Deckel 16, der in einem vorzugsweise aus Kunststoff gefertigten Steckergehäuse 17 aufgenommen ist. Der elektrische Anschluss erfolgt dabei über Steckerpins 18. Eine flüssigkeitsdichte Verbindung des Steckergehäuses 17 mit dem Ventilgehäuse 13 wird dadurch erreicht, dass zwischen dem Ventilgehäuse 13 und dem Steckergehäuse 17 eine Labyrinthdichtung 19 ausgebildet ist. In einer bevorzugten Ausführungsform wird das Steckergehäuse 17 direkt in einem Spritzgussprozess auf das Ventilgehäuse 13 gespritzt.

Zwischen dem Ventilgehäuse 13 und dem Steckergehäuse 17 befindet sich ein Abschlussstück 20, welches das Ventilgehäuse 13 verschließt. Um das Austreten von Kraftstoff durch Leckage aus dem Druckregelventil 1 zu vermeiden, ist zwischen dem Abschlussstück 20 und dem Ventilgehäuse 13 ein Dichtring 21 angeordnet. Der Dichtring 21 ist vorzugsweise ein O-Ring, es eignet sich aber auch jeder weitere, dem Fachmann bekannte Dichtring.

Das Abschlussstück 20 ist so ausgebildet, dass zwischen der Ankerplatte 14 und dem Abschlussstück 20 ein Hohlraum 22 ausgebildet wird. Gleichzeitig dient das Abschlussstück 20 als Anschlag zur Wegbegrenzung des Ventilkolbens 11. Hierzu ist zwischen einer ersten Stirnseite 24 der Ankerplatte 14 und einer Stirnfläche 25 des Abschlussstückes 20 ein Spalt 23 ausgebildet. Die Höhe des Spaltes 20 entspricht dabei der im Öffnungsweg des Ventilkolbens 11.

Wenn die Spule 15 stromlos geschaltet wird, bewegt sich der Ventilkolben 11 in Richtung des Abschlussstückes 20. Hierdurch hebt sich das Schließelement 9 aus seinem Dichtsitz 10 und gibt über die Bohrung 6 und die Drosselstelle 7 die Verbindung aus dem Hochdruckspeicher 2 in die Niederdruckleitung 3 frei. Der Öffnungsvorgang wird durch ein Federelement 26 unterstützt, welches in einem den Ventilkolben 11 umgebenden Federraum 27 aufgenommen ist. Das Federelement 26 ist als Druckfeder ausgebildet und stützt sich mit einer Seite auf die zweite Stirnseite 28 der Ankerplatte 14 und mit der anderen Seite auf eine Stirnseite 29 des Federraums 27. Durch die Federkraft des Federelementes 26 wird so bei nicht bestromter Magentspule 15 die Ankerplatte 14 in Richtung des Abschlussstückes 20 gedrückt. Die Öffnungsbewegung des Ventilkolbens 11, der mit der Ankerplatte 14 fest verbunden ist, wird dadurch gestoppt, dass die erste Stirnseite 24 der Ankerplatte 14 an die Stirnfläche 25 des Abschlussstückes 20 anschlägt. Der Öffnungsweg des Ventilkolbens 11 ist dabei so ausgewählt, dass bei einem kugelförmig ausgebildeten Schließelement 9, welches vorzugsweise frei beweglich aufgenommen ist, dieses sich aus seinem Dichtsitz 10 hebt, aber nicht aus dem Konus 8 am Ventilkolben 11 vorbei seine Position verlassen kann.

An der dem Schließelement 9 zugewandeten Seite ist der Ventilkolben 11 von einem Ventilraum 30 umschlossen. Aus dem Ventilraum 30 verläuft eine Bohrung 31, über die der Ventilraum 30 mit der Niederdruckleitung 3 verbunden ist. Bei der in Figur 1 dargestellten Ausführungsform ist der Ventilkolben 11 auf der dem Ventilraum 30 zugewandten Seite in einem kleineren Durchmesser ausgeführt als entlang der Führung 12. Hierdurch ist am Ventilkolben 11 eine Stufe 32 ausgebildet. Der Ventilkolben 11 endet in einem konischen Abschluss 33.

Der konische Abschluss 33 weist, wie in Figur 1.1 dargestellt, eine Kalotte 44 auf, die das kugelförmig ausgebildete Schließelement 9 aufnimmt. Bei dem konischen Abschluss 33 des Ventilkolbens 11 mit Kalotte 44 ist zwischen der Kalotte 44 und dem Schließelement 9 vorzugsweise ein Ölfilm ausgebildet. Die durch den Ölfilm entstehenden Adhäsionskräfte führen dazu, dass beim Öffnen des Druckregelventils 1 das Schließelement 9 aus dem Schließsitz 10 gezogen wird und so die Verbindung zwischen dem Hochdruckspeicher 2 und der Niederdruckleitung 3 sicher geöffnet wird.

Um zu vermeiden, dass aus dem Hochdruckspeicher 2 Verunreinigungen in das Druckregelventil 1 gelangen und so möglicherweise die Dichtfunktion des Schließelements 9 gestört wird, ist auf der in den Hochdruckspeicher 2 weisenden Seite des Ventilstücks 5 in einer bevorzugten Ausführungsform ein Filterelement 34 angeordnet.

Die zur einwandfreien Funktion des Druckhalteventils 1 erforderliche Maßhaltigkeit wird durch einen Distanzring 35 gewährleistet, der zwischen dem Ventilstück 5 und dem Ventilgehäuse 13 angeordnet ist. Über die Dicke des Distanzrings 35 lässt sich das Ventilstück 5 so positionieren, dass das Schließelement 9 bei geschlossenem Druckregelventil 1 so in seinem Schließsitz 10 gestellt ist, das kein Kraftstoff aus dem Hochdruckspeicher 2 ausströmen kann. Die Befestigung des Distanzringes 35 und des Ventilstücks 5 im Ventilgehäuse 13 erfolgt vorzugsweise formschlüssig mittels einer Bördelkante 36. Eine druck- und flüssigkeitsdichte Verbindung zwischen dem Ventilstück 5 und dem Gehäuse 37 des Hochdruckspeichers 2 wird dadurch erreicht, dass am Ventilstück 5 eine Beißkante 38 ausgebildet ist. Das Ventilstück 5 wird mit der Beißkante 38 gegen das Gehäuse 37 des Hochdruckspeichers 2 gepresst. Hierzu wird das Ventilgehäuse 13 mit einer Gewindehülse 39 im Gehäuse 37 des Hochdruckspeichers 2 verschraubt. Die notwendige Anpresskraft, die erforderlich ist, um eine duckdichte Verbindung zwischen dem Ventilstück 5 und dem Gehäuse 37 des Hochdruckspeichers 2 zu erreichen, wird durch einen im Ventilgehäuse 13 aufgenommenen Sprengring 40 erreicht. Die Gewindehülse 39 drückt gegen den Sprengring 40, wodurch das Ventilgehäuse 13 in Richtung des Hochdruckspeichers 2 geführt wird. Gleichzeitig führt eine im Hochdruckspeicher 2 auf das Druckregelventil 1 wirkende Druckkraft oder eine außen auf das Druckregelventil 1 aufgebrachte Zugkraft dazu, dass der Sprengring 40 gegen die Gewindehülse 39 gedrückt wird. Über das Gewinde 41 ist Gewindehülse 39 kraftschlüssig mit dem Gehäuse 37 des Hochdruckspeichers 2 verbunden, so dass bei einer in Richtung auf die Gewindehülse 39 wirkende Kraft auf den Sprengring 40 der Sprengring 40 und damit das Ventilgehäuse 13 an seiner Position gehalten wird.

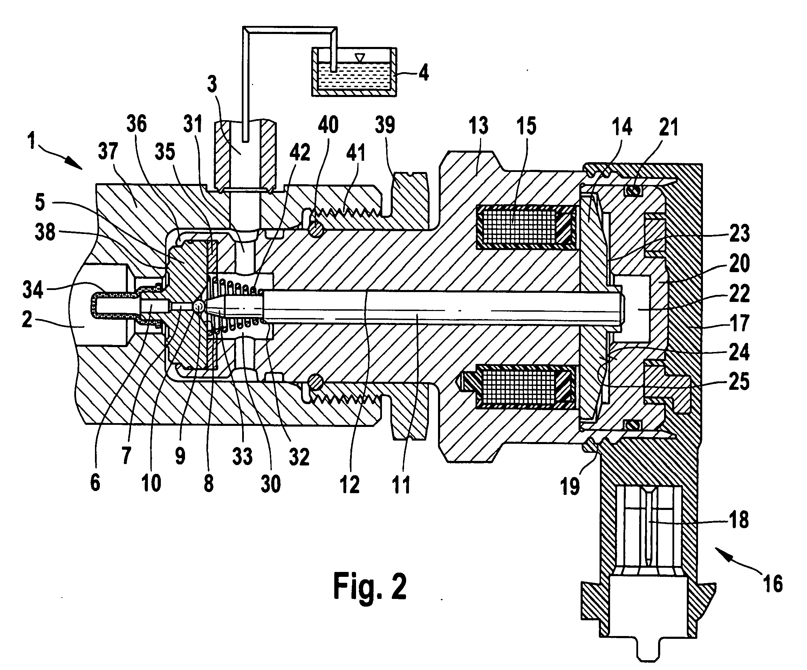

Figur 2 zeigt einen Schnitt durch eine zweite Ausführungsform eines erfindungsgemäß gebildeten Druckregelventils.

Im Unterschied zu der in Figur 1 dargestellten Ausführungsform ist hier ein Federelement 42 im Ventilraum 30 aufgenommen. Dafür entfällt das in Figur 1 dargestellte Federelement 26, welches auf die Ankerplatte 14 wirkt.

Bei der in Figur 2 dargestellten Ausführungsform ist das Federelement 42 als konisch gewickelte Spiralfeder ausgebildet. Mit einer Seite stützt sich das Federelement 42 gegen die Stufe 32 im Ventilkolben 11, mit der anderen Seite gegen das Ventilstück 5. Das Federelement 42 ist als Druckfeder ausgebildet, so dass es unterstützend beim Öffnen des Druckregelventils 1 wirkt.

Der Öffnungsweg des Ventilkolbens 11 wird auch hier dadurch begrenzt, dass die erste Stirnseite 24 der Ankerplatte 14 an die Stirnfläche 25 des Abschlussstücks 20 anschlägt. Die Breite des Spaltes 23 zwischen der Ankerplatte 14 und dem Abschlussstück 20 entspricht dabei der vom Ventilkolben 11 zurückgelegten Weglänge. Auch hier ist die Weglänge so gewählt, dass das lose im Konus 8 des Ventilstücks 5 aufgenommene kugelförmig ausgebildete Schließelement 9 nicht aus dem Konus 8 herausfallen kann. Zum Verschließen des Druckregelventils 1 wird das Schließelement 9 vorzugsweise mittels einer plan geschliffenen Stirnfläche des konischen Abschlusses 33 des Ventilkegels 11 in den Dichtsitz 10 gestellt. Neben der plan geschliffenen Abschlussfläche kann die Abschlussfläche auch in Form einer Kalotte 44 (vgl. Figur 1.1) gestaltet sein, welche das kugelförmig ausgebildete Schließelement 9 aufnimmt. In einer bevorzugten Ausführungsform befindet sich zwischen dem kugelförmig ausgebildetem Schließelement 9 und der Kalotte 44 ein Ölfilm, so dass das kugelförmig ausgebildete Schließelement 9 aufgrund der dadurch entstehenden Adhäsionskräfte beim Öffnen des Druckregelventils 1 aus seinem Dichtsitz 10 gezogen wird.

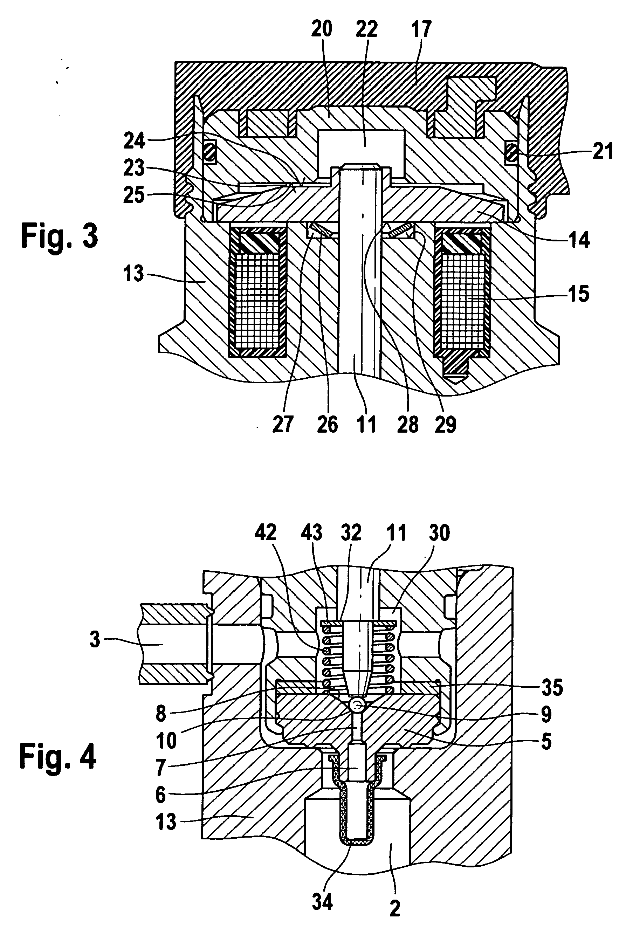

Figur 3 ist ein Ausschnitt aus einem erfindungsgemäß ausgebildeten Druckregelventil in einer weiteren Ausführungsform entnehmbar.

Bei der in Figur 3 dargestellten Ausführungsform ist an Stelle des als Spiralfeder ausgebildeten Federelementes 26, wie es in Figur 1 dargestellt ist, das Federelement 26 in Form einer Tellerfeder ausgebildet. Das als Tellerfeder ausgebildete Federelement 26 ist in dem den Ventilkolben 11 umgebenen Federraum 27 auf der der Ankerplatte 14 zugewandten Seite angeordnet. Das Federelement 26 stützt sich mit einer Seite gegen die Stirnseite 29 des Federraums 27 ab und mit der anderen Seite gegen die zweite Stirnseite 28 der Ankerplatte 14. Das als Tellerfeder ausgebildete Federelement 26 wirkt auch hier als Druckfeder unterstützend beim Öffnen des Druckregelventils 1.

Neben der in Figur 1 dargestellten Spiralfeder und der in Figur 3 dargestellten Tellerfeder kann als Federelement 26 auch eine Schraubendruckfeder, ein Tellerfederpaket oder jede beliebige weitere dem Fachmann bekannte Federgeometrie, die sich als Druckfeder einsetzen lässt, verwendet werden.

Figur 4 zeigt eine weitere Ausführungsform eines erfindungsgemäß ausgebildeten Druckregelventils.

An Stelle der in Figur 2 gezeigten konisch gewickelten Spiralfeder als Federelement 42 ist bei der in Figur 4 dargestellten Ausführungsform eine zylindrisch gewickelte Spiralfeder 42 eingesetzt. Das als zylindrisch gewickelte Spiralfeder ausgeführte Federelement 42 stützt sich mit einer Seite gegen das Ventilstück 5 und mit der anderen Seite gegen einen Ring 43, der auf der Stufe 32 des Ventilkolbens 11 aufliegt. Für den Einsatz einer zylindrisch gewickelten Spiralfeder als Federelement 42 ist es auch möglich, an Stelle des Rings 43 eine Rippe am Ventilkolben 11 auszubilden, gegen welche sich das Federelement 42 abstützt.

Neben der in Figur 2 dargestellten konisch gewickelten Spiralfeder als Federelement 42 ist es auch möglich, ein Federelement 42 einzusetzen, welches als kegelige Schrauben- Druckfeder aus einem Band mit rechteckigem Querschnitt geformt ist. Weiterhin ist es möglich, an Stelle der in den Figuren 2 und 4 dargestellten Federelemente 42 in Form von konisch bzw. zylindrisch gewickelten Schraubenfedern auch Tellerfedern oder ein Tellerfederpaket zu verwenden. Weiterhin ist jede weitere dem Fachmann bekannte Form einer Druckfeder als Federelement 42 einsetzbar.

Zum Betrieb des Druckregelventils 1 lässt sich neben dem vorstehend beschriebenen Aktor in Form eines Elektromagneten auch ein Piezo-Aktor oder ein hydraulisch/mechanischer Steller einsetzen.

### Bezugszeichenliste

- 1: Druckregelventil
- 2: Hochdruckspeicher
- 3: Niederdruckleitung
- 4: Kraftstoffvorratsbehälter
- 5: Ventilstück
- 6: Bohrung
- 7: Drosselstelle
- 8: Konus
- 9: Schließelement
- 10: Schließsitz
- 11: Ventilkolben
- 12: Führung
- 13: Ventilgehäuse
- 14: Ankerplatte
- 15: Magnetspule
- 16: Stecker
- 17: Steckergehäuse
- 18: Steckerpins
- 19: Labyrinthdichtung
- 20: Abschlussstück
- 21: Dichtring
- 22: Hohlraum
- 23: Spalt
- 24: Erste Stirnseite der Ankerplatte 14
- 25: Stirnfläche des Abschlussstücks 20
- 26: Federelement
- 27: Federraum
- 28: Zweite Stirnseite der Ankerplatte 14
- 29: Stirnseite des Federraums 27
- 30: Ventilraum
- 31: Bohrung
- 32: Stufe
- 33: Konischer Abschluss
- 34: Filterelement
- 35: Distanzring
- 36: Bördelkante
- 37: Gehäuse des Hochdruckspeichers 2
- 38: Beißkante
- 39: Gewindehülse
- 40: Sprengring
- 41: Gewinde
- 42: Federelement
- 43: Ring
- 44: Kalotte

## Patentansprüche

1. Druckhalteventil zum Öffnen bzw. Verschließen eines Ablaufs eines Hochdruckspeichers (2) einer Verbrennungskraftmaschine, ein aktorbetätigtes kugelförmiges Schließelement (9) umfassend, welches eine Verbindung vom Hochdruckspeicher (2) in eine Niederdruckleitung (3) verschließt oder freigibt, und mit einem Federelement (26, 42), welches derart angeordnet ist, dass beim Stillstand der Verbrennungskraftmaschine das Schließelement (9) die Verbindung vom Hochdruckspeicher (2) in die Niederdruckleitung (3) freigibt, **dadurch gekennzeichnet, dass** ein Ventilkolben (11), dessen Abschluss eine Kalotte (44) bildet, das kugelförmige Schließelement (9) aufnimmt.

2. Druckhalteventil nach Anspruch 1, **dadurch gekennzeichnet, dass** das kugelförmige Schließelement (9) durch Adhäsionskräfte in der Kalotte (44) gehalten ist und so beim Öffnen des Druckregelventils (1) aus dem Dichtsitz (10) gezogen wird.

3. Druckregelventil nach Anspruch 1 oder 2, **dadurch gekennzeichnet, dass** das Federelement (26) in einem Federraum (27) im Ventilgehäuse (13), einen Ventilkolben (11) umschließend, aufgenommen ist und sich mit einer Seite gegen eine Ankerplatte (14) des Aktors und mit der anderen Seite gegen eine Stirnseite (29) des Federraums (27) abstützt.

4. Druckregelventil nach Anspruch 3, **dadurch gekennzeichnet, dass** das Federelement (26) eine Spiralfeder ist.

5. Druckregelventil nach Anspruch 3, **dadurch gekennzeichnet, dass** das Federelement (26) eine Tellerfederfeder ist.

6. Druckregelventil nach Anspruch 1, **dadurch gekennzeichnet, dass** das Federelement (42) an der dem Schließelement (9) zugewandten Seite den Ventilkolben (11) umschließt und sich mit einer Seite gegen ein einen Schließsitz (10) aufweisendes Ventilstück (5) abstützt.

7. Druckregelventil nach Anspruch 6, **dadurch gekennzeichnet, dass** das Federelement (42) eine konisch gewickelte Spiralfeder ist und sich mit der vom Ventilstück (5) entfernten Seite gegen eine Stufe (32) vom Ventilkolben (11) abstützt.

8. Druckregelventil nach Anspruch 6, **dadurch gekennzeichnet, dass** das Federelement (42) eine zylindrisch ausgebildete Spiralfeder ist, die sich mit der dem Ventilstück (5) abgewandten Seite auf einen den Ventilkolben (11) umschließenden Ring (43) abstützt.

9. Druckregelventil nach einem der Ansprüche 1 bis 8, **dadurch gekennzeichnet, dass** der Aktor eine Ankerplatte (14) und eine Magnetspule (15) umfasst.

10. Druckregelventil nach Anspruch 9, **dadurch gekennzeichnet, dass** die Ankerplatte (14) in geöffnetem Zustand gegen einen Anschlag (24, 25) gestellt ist.

## Claims

1. Pressure-holding valve for opening and closing an outlet of a high-pressure accumulator (2) of an internal combustion engine, comprising an actuator- operated spherical closing element (9) which closes or opens a connection from the high-pressure accumulator (2) into a low-pressure line (3), and having a spring element (26, 42) which is arranged in such a way that, when the internal combustion engine is at a standstill, the closing element (9) opens the connection from the high-pressure accumulator (2) into the low-pressure line (3), **characterized in that** a valve piston (11), the end of which forms a spherical cap (44), receives the spherical closing element (9).

2. Pressure-holding valve according to Claim 1, **characterized in that** the spherical closing element (9) is held in the spherical cap (44) by adhesion forces and is thus pulled out of the sealing seat (10) during opening of the pressure control valve (1).

3. Pressure control valve according to Claim 1 or 2, **characterized in that** the spring element (26) is received in a spring space (27) in the valve housing (13), enclosing a valve piston (11), and is supported with one side against an armature plate (14) of the actuator and with the other side against an end side (29) of the spring space (27).

4. Pressure control valve according to Claim 3, **characterized in that** the spring element (26) is a helical spring.

5. Pressure control valve according to Claim 3, **characterized in that** the spring element (26) is a disc spring.

6. Pressure control valve according to Claim 1, **characterized in that** the spring element (42) encloses the valve piston (11) on the side which faces the closing element (9), and is supported with one side against a valve element (5) which has a closing seat (10).

7. Pressure control valve according to Claim 6, **characterized in that** the spring element (42) is a conically wound helical spring and is supported with the side which is remote from the valve element (5) against a step (32) of the valve piston (11).

8. Pressure control valve according to Claim 6, **characterized in that** the spring element (42) is a cylindrically formed helical spring which is supported with the side which faces away from the valve element (5) on a ring (43) which encloses the valve piston (11).

9. Pressure control valve according to one of Claims 1 to 8, **characterized in that** the actuator comprises an armature plate (14) and a magnet coil (15).

10. Pressure control valve according to Claim 9, **characterized in that**, in the open state, the armature plate (14) is set against a stop (24, 25).

## Revendications

1. Soupape de maintien de pression pour ouvrir ou fermer une sortie d'un accumulateur haute pression (2) d'un moteur à combustion interne, comprenant un élément de fermeture (9) de forme sphérique actionné par un actionneur, qui ferme ou ouvre une connexion depuis l'accumulateur haute pression (2) dans une conduite basse pression (3), et comprenant un élément de ressort (26, 42) qui est disposé de telle sorte qu'à l'arrêt du moteur à combustion interne, l'élément de fermeture (9) ouvre la connexion de l'accumulateur haute pression (2) dans la conduite basse pression (3), **caractérisée en ce qu'**un piston de soupape (11), dont la terminaison forme une calotte (44), reçoit l'élément de fermeture (9) de forme sphérique.

2. Soupape de maintien de pression selon la revendication 1, **caractérisée en ce que** l'élément de fermeture (9) de forme sphérique est maintenu par des forces d'adhésion dans la calotte (44) et est ainsi tiré hors du siège d'étanchéité (10) lors de l'ouverture de la soupape de régulation de pression (1).

3. Soupape de régulation de pression selon la revendication 1 ou 2, **caractérisée en ce que** l'élément de ressort (26) est reçu dans un espace de ressort (27) dans le boîtier de soupape (13) en entourant un piston de soupape (11), et s'appuie avec un côté contre une plaque d'induit (14) de l'actionneur et avec l'autre côté contre un côté frontal (29) de l'espace de ressort (27).

4. Soupape de régulation de pression selon la revendication 3, **caractérisée en ce que** l'élément de ressort (26) est un ressort spiral.

5. Soupape de régulation de pression selon la revendication 3, **caractérisée en ce que** l'élément de ressort (26) est un ressort Belleville.

6. Soupape de régulation de pression selon la revendication 1, **caractérisée en ce que** l'élément de ressort (42) entoure le piston de soupape (11) du côté tourné vers l'élément de fermeture (9) et s'appuie avec un côté contre une pièce de soupape (5) présentant un siège de fermeture (10).

7. Soupape de régulation de pression selon la revendication 6, **caractérisée en ce que** l'élément de ressort (42) est un ressort spiral enroulé en cône et s'appuie avec le côté éloigné de la pièce de soupape (5) contre un étage (32) du piston de soupape (11).

8. Soupape de régulation de pression selon la revendication 6, **caractérisée en ce que** l'élément de ressort (42) est un ressort spiral réalisé sous forme cylindrique, qui s'appuie avec le côté opposé à la pièce de soupape (5) contre une bague (43) entourant le piston de soupape (11).

9. Soupape de régulation de pression selon l'une quelconque des revendications 1 à 8, **caractérisée en ce que** l'actionneur comprend une plaque d'induit (14) et une bobine magnétique (15).

10. Soupape de régulation de pression selon la revendication 9, **caractérisée en ce que** la plaque d'induit (14) est posée dans l'état ouvert contre une butée (24, 25).
